# EUROPEAN PATENT APPLICATION

(11) **EP 4 800 783 A1**
(43) Date of publication of application: **02.09.2026**
(21) Application number: 26157077.4
(22) Date of filing: 06.02.2026
(51) Int. Cl.: H01M 8/2483, C25B 9/70, H01M 8/0258, C25B 15/08

(54) **ELECTROCHEMICAL CELL ASSEMBLIES AND METHODS OF OPERATION**

(30) Priority: 26.02.2025 US 202519064144
(71) Applicant: Aerospace Carbon Solutions LLC, Evendale, OH 45215 (US)
(72) Inventor: ERNO, Daniel, Niskayuna, 12309-1027 (US)
(74) Representative: Openshaw & Co.

(57) **Abstract**

In some embodiments, an electrochemical cell assembly (100, 180) includes a plurality of electrochemical cells (106). The electrochemical cell assembly (100, 180) includes a first end (102, 186) of the that receives and discharges an input stream and a second end (104, 188) disposed opposite the first end (102, 186). Each electrochemical cell in the plurality of electrochemical cells (106) comprises an electrolyte (130), a first electrode (132), and a second electrode (134). A plurality of flow plates (108, 184) are disposed between adjacent electrochemical cells (106) in the plurality of electrochemical cells (106). Each of the plurality of flow plates (108, 184) comprises at least one slot that defines a portion of an axial flow channel (114, 116, 118, 120, 182) that extends from the first end (102, 186) to the second end (104, 188). The electrochemical cell assembly (200) (180) (100) also comprises an insert (122, 124, 126, 128, 190) disposed in the axial flow channel (114, 116, 118, 120, 182). The at insert (122, 124, 126, 128, 190) has a geometry that is non-uniform along an axial direction that extends from the first end (102, 186) to the second end (104, 188) of the electrochemical cell assembly (100, 180).

## Description

### Technical Field

This disclosure relates to electrochemical cell assemblies and, in particular, to flow manifolds for electrochemical cell assemblies.

### BACKGROUND

Electrochemical cells, such as those used in fuel cells or electrolyzers, may be stacked adjacent to or on top of one another to form a cell stack. In some configurations, an electrochemical cell includes flow plates with two-dimensional features cut into them to allow flow to pass in a planar fashion through the cell. Such stacked configurations allow for efficient use of space. One or more manifolds may facilitate the flow of input streams that include reactants through the cell stack. The manifolds may include an input manifold to distribute reactants to each cell in the cell stack. The manifolds may also include an outlet manifold to direct reaction products and any unreacted reactants away from each cell in the cell stack.

### BRIEF DESCRIPTION OF DRAWINGS

Various needs are at least partially met through the provision of the electrochemical cell assemblies and methods of operation described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic perspective view of an electrochemical cell assembly that includes inserts, with a front portion of the electrochemical cell assembly hidden, in accordance with various embodiments of these teachings;
FIG. 2 is an exploded schematic view of an electrochemical cell in the electrochemical cell assembly of FIG. 1, in accordance with various embodiments of these teachings;
FIG. 3 is a perspective view of a portion of the electrochemical cell assembly of FIG. 1 without the inserts;
FIG. 4 is a perspective view of a portion of the electrochemical cell assembly of FIG. 1 that includes the inserts;
FIG. 5 is a perspective view of the inserts in the electrochemical cell assembly of FIG. 1;
FIG. 6A is a cross-sectional side view of an exemplary axial flow channel in an electrochemical cell assembly without an insert, in accordance with some embodiments;
FIG. 6B is a cross-sectional side view of an exemplary axial flow channel in an electrochemical cell assembly with an insert, in accordance with some embodiments;
FIG. 7A is graph showing a flow profile across an exemplary electrochemical cell assembly that does not include an insert;
FIG. 7B is a graph showing a flow profile across an exemplary electrochemical cell assembly that includes an insert;
FIG. 8 is a schematic top view of an insert for use in an electrochemical cell assembly, according to some embodiments; and
FIG. 9 is a flow diagram of a method of assembling an electrochemical cell assembly, according to some embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

To manage simplicity and cost, each cell unit in an electrochemical cell assembly is typically designed to be the same. In order to keep each cell assembly identical, the cross-sections of manifolds may be constant throughout the cell stack. Constant cross-section manifolds, however, may promote maldistribution of flow to the cell stack. For example, a cell stack configured with manifolds having a constant cross-section throughout may provide excess flow to cells that are disposed at a feed end of the stack and may starve cells that are disposed opposite the feed end.

Provided herein are manifolds for electrochemical cell assemblies that comprise a stack of electrochemical cells. The electrochemical cells include flow plates. The flow plates define axial flow channels that act as manifolds that supply input streams (e.g., reactants) to the cell stack and direct output streams (e.g., products) away from the cell stack. The flow plates include slots formed therein that form the axial flow channels. The slots have a cross-section that is constant throughout the cell stack. The axial flow channels include inserts disposed therein. The inserts have a cross section that is non-uniform throughout the cell stack. In this manner, the inserts form an axial flow channel that has a non-uniform cross section throughout the cell stack.

The inserts are shaped to affect flow distribution through the plurality of electrochemical cells in the cell stack. In some examples, the inserts are shaped to promote a uniform distribution of flow of the input streams through the plurality of electrochemical cells. In some embodiments, the inserts have a geometry that is non-uniform along an axial direction of the electrochemical cell assembly. In some embodiments, the inserts have a taper to balance flow distribution through the plurality of electrochemical cells.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

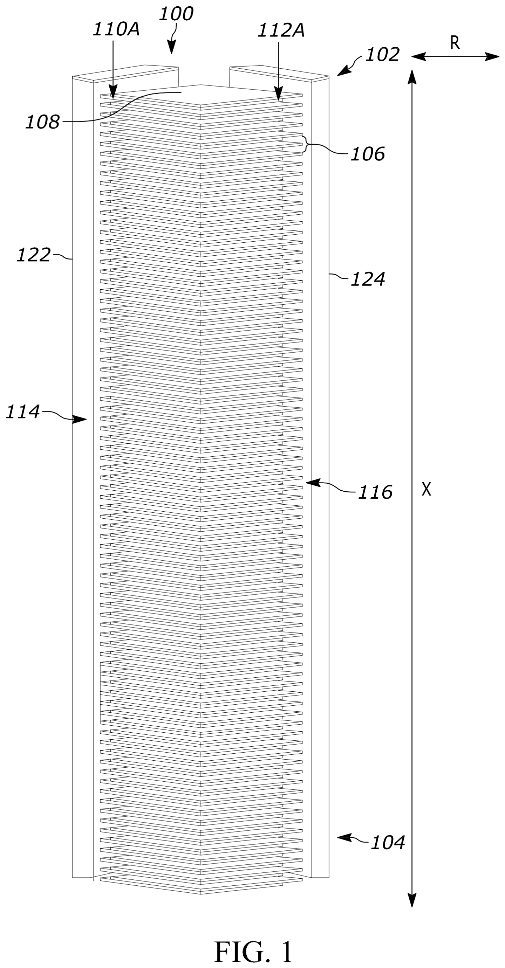

Turning to the figures, FIG. 1 shows an electrochemical cell assembly 100 according to some embodiments. The electrochemical cell assembly 100 may also be referred to as a cell stack. The electrochemical cell assembly 100 may be operated as a fuel cell or as an electrolyzer.

The electrochemical cell assembly 100 includes a plurality of electrochemical cells 106 that are stacked adjacent to or on top of each other. A plurality of flow plates 108 bound the electrochemical cells 106. The electrochemical cell assembly 100 can include any suitable number of electrochemical cells 106 (e.g., 2, 4, 6, 8, 10, etc.). In some configurations, the electrochemical cell assembly 100 includes at least two electrochemical cells 106. The electrochemical cell assembly 100 defines a first end 102 that receives input stream 110A, 112A and discharges output streams 110B, 112B. The electrochemical cell assembly 100 also defines a second end 104 that is disposed opposite the first end 102. The electrochemical cell assembly 100 defines an axial direction X that extends from the first end 102 to the second end 104. The electrochemical cell assembly 100 also defines a lateral I direction R that is perpendicular to the axial direction X.

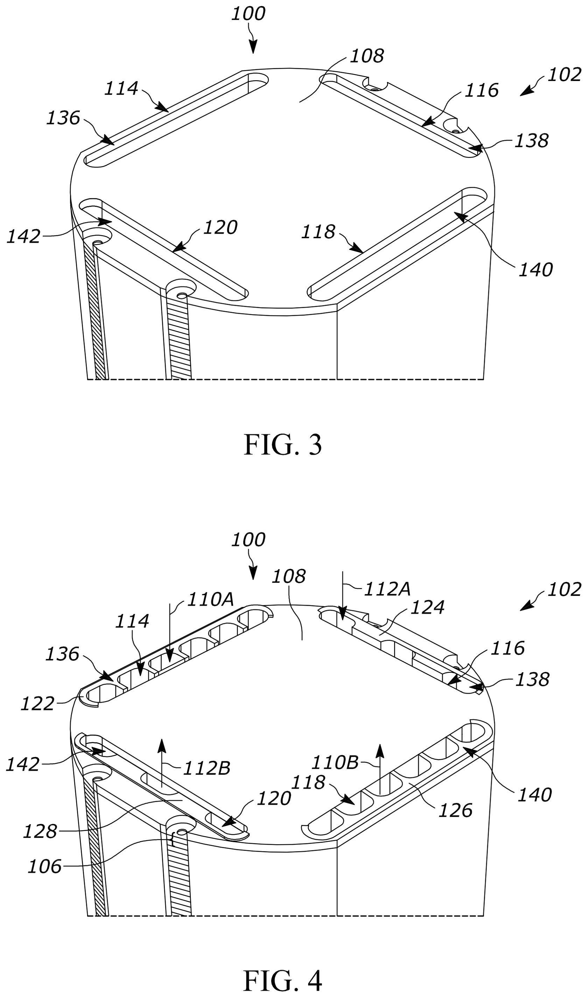

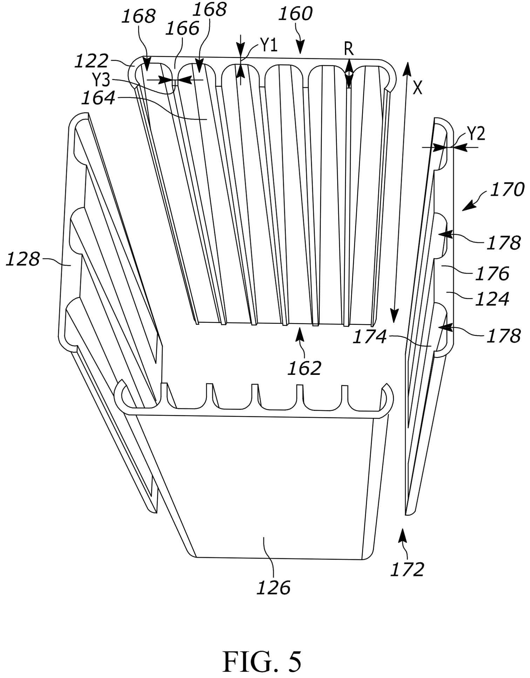

The flow plates 108 in the electrochemical cell assembly 100 define a first axial flow channel 114, a second axial flow channel 116, a third axial flow channel 118, and a fourth axial flow channel 120. The third axial flow channel 118 and the fourth axial flow channel 120 are not shown in FIG. 1 but see FIGS. 3 and 4 for these features. The first axial flow channel includes a first insert 122. The second axial flow channel 116 includes a second insert 124 disposed therein. The third axial flow channel 118 includes a third insert 126 disposed therein. The fourth axial flow channel 120 includes fourth insert 128 disposed therein. The third insert 126 and the fourth insert 128 are not shown in FIG. 1 but see FIG. 4 and 5 for these features.

The inserts 122, 124, 126, 128 are shaped to affect flow distribution through the plurality of electrochemical cells 106 in the electrochemical cell assembly 100. In some examples, the inserts 122, 124, 126, 128 are shaped to promote a uniform distribution of flow distribution of the input streams 110A, 112A through the plurality of electrochemical cells 106. In some embodiments, one or more of the inserts 122, 124, 126, 128 have a geometry that is non-uniform along the axial direction X. In the illustrated embodiment, the inserts 122, 124, 126, 128 have a geometry with a taper that increases in size from the first end 102 of the electrochemical cell assembly 100 to the second end 104. The taper of the inserts 122, 124, 126, 128 helps to balance flow distribution through the plurality of electrochemical cells 106.

In operation, the electrochemical cell assembly 100 receives a first input stream 110A. The first axial flow channel 114 of the electrochemical cell assembly receives the first input stream 110A. The first axial flow channel 114 distributes the first input stream 110A axially through the electrochemical cell assembly and laterally across each of the plurality of electrochemical cells 106. The first input stream 110A includes reactants for reactions occurring within the plurality of electrochemical cells 106.

The electrochemical cell assembly 100 also receives a second input stream 112A. The first axial flow channel 114 distributes the first input stream 110A axially through the electrochemical cell assembly 100 and also laterally across each of the plurality of electrochemical cells 106. The second axial flow channel 116 receives the second input stream 112A. The second axial flow channel 116 distributes the second input stream 112A axially through the electrochemical cell assembly 100 and also laterally across each of the plurality of electrochemical cells 106.

The electrochemical cell assembly 100 may be a part of an electrochemical device. As used herein, "electrochemical device" refers to any device that generates electrical energy from chemical reactions or uses electrical energy to drive chemical reactions. The electrochemical device as described herein may operate in an electrolysis mode (e.g., for chemical generation) and/or in a fuel cell mode (i.e., for electricity generation).

Generally, during operation, the electrochemical cell assembly 100 is maintained at high operation temperatures, such as temperatures between about 400 ºC to about 1000 ºC, to facilitate the electrochemical reactions.

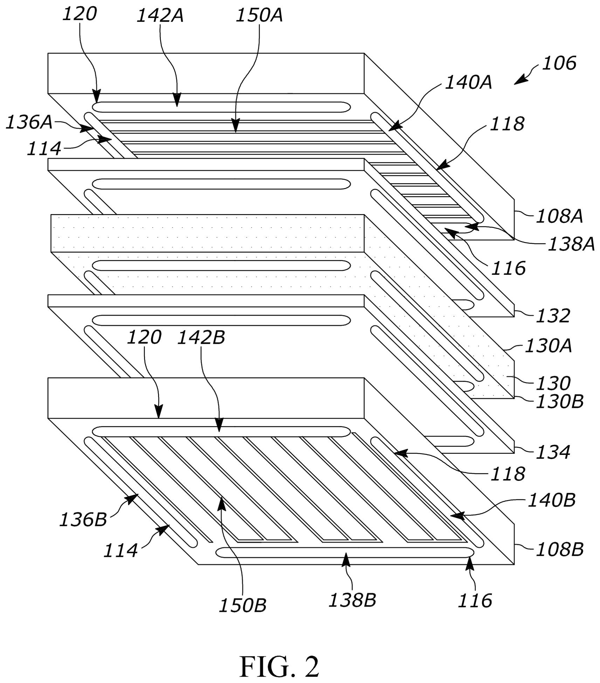

FIG. 2 is an exploded view of an electrochemical cell 106 of the electrochemical cell assembly 100 of FIG. 1, according to some embodiments. The electrochemical cell 106 includes an electrolyte 130, a first electrode 132, and a second electrode 134. The first electrode 132 is disposed on a first side 130A of the electrolyte 130. The second electrode 134 is disposed on a second side 130B of the electrolyte 130. In some configurations, the first electrode 132 is an anode and the second electrode 134 is a cathode.

The electrochemical cell 106 also includes a first flow plate 108A and a second flow plate 108B. The first flow plate 108A and the second flow plate 108B separate the electrochemical cell 106 from adjacent electrochemical cells within the electrochemical cell assembly 100.

In some embodiments, at least one of the first flow plate 108A and the second flow plate 108B are made of an electrically conductive material. Any conductive material can be used. In some examples, the conductive material is a metallic material. In some aspects, the first flow plate 108A and/or the second flow plate 108B can be interconnects that electrically and/or physically connect each electrochemical cell 106 in the cell stack to adjacent cells. For example, the first flow plate 108A and/or the second flow plate 108B can electrically and/or physically connect an anode of one electrochemical cell to a cathode of an adjacent electrochemical cell in the cell stack.

The first flow plate 108A is disposed adjacent to the first electrode 132. The first flow plate 108A includes one or more channels 150A that direct the flow of the first input stream 110A laterally across the first electrode 132. The channel(s) 150A are recesses formed in the first flow plate 108A and are in fluid communication with the first axial flow channel 114 and the third axial flow channel 118. The channel(s) 150A may receive reactants for reactions that occur in the first electrode 132 from the first axial flow channel 114 via the first input stream 110A (see FIG. 4). The channel(s) 150A discharges products from the reactions that occur in the first electrode 132 to the third axial flow channel 118 in a first output stream 110B (see FIG. 4).

The first flow plate 108A defines a first slot 136A, a second slot 138A, a third slot 140A, and a fourth slot 142A. The first slot 136A defines a portion of the first axial flow channel 114. The second slot 138A defines a portion of the second axial flow channel 116. The third slot 140A defines a portion of the third axial flow channel 118. The fourth slot 142A defines a portion of the fourth axial flow channel 120.

In the illustrated embodiment, the first slot 136A, the second slot 138A, the third slot 140A, and the fourth slot 142A are generally oblong in shape (e.g., cross-sectional shape when viewed perpendicular to the axial direction). However, the slots 136A, 138A, 140A, 142A may have any suitable shape and, in other embodiments, may be circular, oval, or rectangular in shape.

The second flow plate 108B is disposed adjacent to the second electrode 134. The second flow plate 108B includes one or more channels 150B that direct the flow of the first input stream 110A across the second electrode 134. The channel(s) 150B are formed in the second flow plate 108B and are in fluid communication with the second axial flow channel 116 and the fourth axial flow channel 120. The channel(s) 150B may receive reactants for reactions that occur in the second electrode 134 from the second axial flow channel 116 via the second input stream 112A (see FIG. 4). The channel(s) 150A may discharge products from reactions that occur in the second electrode 134 to the fourth axial flow channel 118B in a second output stream 112B (see FIG. 4).

The second flow plate 108B defines a first slot 136B, a second slot 138B, a third slot 140B, and a fourth slot 142B. The first slot 136B defines a portion of the first axial flow channel 114. The second slot 138B defines a portion of the second axial flow channel 116. The third slot 140B defines a portion of the third axial flow channel 118. The fourth slot 142B defines a portion of the fourth axial flow channel 120.

In the illustrated embodiment, the first slot 136B, the second slot 138B, the third slot 140B, and the fourth slot 142B are generally oblong in shape (e.g., cross-sectional shape when viewed perpendicular to the axial direction). However, the slots 136B, 138B, 140B, 142B may have any suitable shape and, in other embodiments, may be circular, oval, or rectangular in shape. The slots 136B, 138B, 140B, 142B in the second flow plate 108B are the same size and geometry as the slots 136A, 138A, 140A, 142A in the first flow plate 108A. For example, the first slot 136A is the same size and geometry as the first slot 136B, the second slot 138A is the same size and geometry as the second slot 138B, the third slot 140A is the same size and geometry as the third slot 140B, and the fourth slot 142A is the same size and geometry as the fourth slot 142B. In this manner, when a plurality of the electrochemical cells 106 are stacked, the slots form axial flow channels that have a constant size and shape throughout the cell stack before the insert is positioned within the axial flow channels. For example, the slots form axial flow channels that have a size and shape that is the same or approximately the same in the axial direction when moving from the first end 102 of the electrochemical cell assembly 100 to the second end 104 (see FIG. 1).

As shown, when the electrochemical cell 106 is assembled, the first slot 136A of the first flow plate 108A is aligned with the first slot 136B of the second flow plate 108B. In some examples, a cross-section (e.g., a cross-sectional area when viewed perpendicular to the axial direction X shown in FIG. 1) of the first slot 136A is the same or approximately the same as a cross-section of the first slot 136B. In this manner, when a plurality of electrochemical cells 106 are stacked, the size of the first slots 136A, 136B is generally constant throughout the cell stack.

The second slot 138A of the first flow plate 108A is aligned with the second slot 138B of the second flow plate 108B. In some examples, a cross-section (e.g., a cross-sectional area when viewed perpendicular to the axial direction X shown in FIG. 1) of the second slot 138A is the same or approximately the same as a cross-section of the second slot 138B. In this manner, when a plurality of electrochemical cells 106 are stacked, the size of the second slots 138A, 138B is generally constant throughout the cell stack.

The third slot 140A of the first flow plate 108A is aligned with the third slot 140B of the second flow plate 108B. In some examples, a cross-section (e.g., a cross-sectional area when viewed perpendicular to the axial direction X shown in FIG. 1) of the third slot 140A is the same or approximately the same as a cross-section of the third slot 140B. In this manner, when a plurality of electrochemical cells 106 are stacked, the size of the third slots 140A, 140B is generally constant throughout the cell stack.

The fourth slot 142A of the first flow plate 108A is aligned with the fourth slot 142B of the second flow plate 108B. In some examples, a cross-section (e.g., a cross-sectional area when viewed perpendicular to the axial direction X shown in FIG. 1) of the fourth slot 142A is the same or approximately the same as a cross-section of the fourth slot 142B. In this manner, when a plurality of electrochemical cells 106 are stacked, the size of the fourth slots 142A, 142B is generally constant throughout the cell stack.

It is contemplated that the electrochemical cell 106 may include other components, such as seals, catalysts, etc. Such components are not shown in FIG. 2 for simplicity.

The electrochemical cell 106 may be configured to operate in a fuel cell mode and/or in an electrolysis mode of operation. The electrochemical cell 106 can be any suitable type of electrochemical cell including but not limited to a solid oxide fuel cell (SOFC), a solid oxide electrolyzer (SOE), or a molten carbonate fuel cell (MCFC).

When the electrochemical cell assembly 100 is configured for fuel cell operation, the first input steam 110A is provided to the first electrode 132. The first input stream 110A may be a fuel, such as a hydrogen, carbon monoxide, or methane. The second input stream 112A is provided to the second electrode 134. The second input stream 112A may be an oxidizing gas such as air. The first input streams 110A and the second input stream 112A are not shown in FIG. 2 but are shown in FIG. 4. At the first electrode 132, the first input stream 110A undergoes an oxidation reaction, which releases electrons that travel through an external circuit and then enter the second electrode 134. At the second electrode 134, the oxygen in the second input stream 112A is reduced by the electrons released from the first electrode 132, with the electrolyte 130 allowing only the oxygen ions (O2-) to pass through to the first electrode 132. The oxygen ions (O2-) migrate through the electrolyte 130, where they participate in the oxidation reaction at the first electrode 132.

When the electrochemical cell assembly 100 is configured for electrolysis operation, the second input stream 112A is provided to the second electrode 134. The second input stream 112A may be, for example water (H2O) and/or carbon dioxide (CO2). The second input stream 112A is not shown in FIG. 2 but is shown in FIG. 4. When an electric current is applied, water (H2O) and/or carbon dioxide (CO2) are reduced to hydrogen (H2) and/or carbon monoxide (CO) at the second electrode 134 (i.e., the cathode). Concurrently, oxygen ions (O2-) generated at the second electrode 134 migrate through the electrolyte 130, where they combine to form oxygen gas (O2) at the first electrode 132 (i.e., the anode).

It is contemplated that other arrangements or configurations can be used for the slots in the first flow plate 108A and the second flow plate 108B. For example, in some embodiments, the slots 136A, 138A, 140A, 142A in the first flow plate 108A may not be the same size, shape, and/or geometry as the slots 136B, 138B, 140B, 142B in the second flow plate 108B. Further, in some aspects, the first flow plate 108A may have a different number of slots than the second flow plate 108B.

FIG. 3 shows the first end 102 of the electrochemical cell assembly 100 of FIG. 1. In FIG. 3, the first axial flow channel 114, the second axial flow channel 116, the third axial flow channel 118, and the fourth axial flow channel 120 are empty. That is, the first insert 122, the second insert 124, the third insert 126, and the fourth insert 128 have not yet been inserted into the first axial flow channel 114, the second axial flow channel 116, the third axial flow channel 118, or the fourth axial flow channel 120, respectively.

The flow plates 108 include a first slot 136, a second slot 138, a third slot 140, and a fourth slot 142. In some configurations, each flow plate 108 in the electrochemical cell assembly 100 is the same. For example, the first slot 136, the second slot 138, the third slot 140, and the fourth slot 142 are of the same size and geometry in each flow plate 108 in the electrochemical cell assembly 100. Constructing the electrochemical cell assembly 100 with flow plates 108 having the same size and geometry may simplify the design and manufacture of the flow plates 108.

FIG. 4 shows the first end 102 of the electrochemical cell assembly 100 of FIG. 1. In FIG.4, the first axial flow channel 114 includes the first insert 122, the second axial flow channel 116 includes the second insert 124, the third axial flow channel 118 includes the third insert 126, and the fourth axial flow channel 120 includes the fourth insert 128.

When the flow plates 108 are stacked together (see also FIG. 1), the first slots 136 align to form the first axial flow channel 114. The first axial flow channel 114 receives the first insert 122. The first insert 122 adjusts or modifies a shape of first axial flow channel 114. The first axial flow channel 114 receives the first input stream 110A. The first axial flow channel 114 distributes flow of the first input stream 110A to each of the electrochemical cells 106 that are stacked in the electrochemical cell assembly 100. In particular, the first axial flow channel 114 distributes flow of the first input stream 110A to the first electrodes 132 (not shown in FIG. 4) of the electrochemical cells 106.

When the flow plates 108 are stacked together, the second slots 138 form the second axial flow channel 116. The second axial flow channel 116 receives the second insert 124. The second insert 124 adjusts or modifies a shape of second axial flow channel 116. The second axial flow channel 116 receives the second input stream 112A. The second axial flow channel 116 distributes flow of the second input stream 112A to each of the electrochemical cells 106 that are stacked in the electrochemical cell assembly 100. In particular, the second axial flow channel 116 distributes the second input stream 112A to the second electrodes 134 (not shown in FIG. 4) of the electrochemical cells 106.

When the flow plates 108 are stacked together, the third slots 140 define the third axial flow channel 118. The third axial flow channel 118 receives the third insert 126. The third insert 126 adjusts or modifies a shape of third axial flow channel 118. The third axial flow channel 118 discharges the first output stream 110B. The third axial flow channel 118 discharges the first output stream 110B from the first end 102 of the electrochemical cell assembly 100. The first output stream 110B includes fluid that exits each of the electrochemical cells 106 in the electrochemical cell assembly 100. In particular, the third axial flow channel 118 receives fluid that exits the first electrodes 132 (not shown in FIG. 4) of the electrochemical cells 106.

When the flow plates 108 are stacked together, the fourth slots 142 define the fourth axial flow channel 120. The fourth axial flow channel 120 receives the fourth insert 128. The fourth insert 128 adjusts or modifies a shape of fourth axial flow channel 120. The fourth axial flow channel 120 discharges the second output stream 112B from the first end 102 of the electrochemical cell assembly 100. The second output stream 112B includes fluid that exits each of the electrochemical cells 106 in the electrochemical cell assembly 100. In particular, the fourth axial flow channel 120 receives fluid that exits the second electrodes 134 (not shown in FIG. 4) of the electrochemical cells 106.

Together, the first axial flow channel 114, the first electrodes 132 of the electrochemical cells 106 (not shown in FIG. 4), and the third axial flow channel 118 define a first fluid region or domain. The first fluid domain channels fluid to, across, and away from the first electrodes 132 of the electrochemical cells 106.

Similarly, together, the second axial flow channel 116, the second electrodes 134 of the electrochemical cells 106 (not shown in FIG. 4), and the fourth axial flow channel 120 define a second fluid region or domain. The second fluid domain channels fluid to, across, and away from the second electrodes 134 of the electrochemical cells 106.

FIG. 5 shows the first insert 122, the second insert 124, the third insert 126, and the fourth insert 128, according to some embodiments. The electrochemical cells 106 of the electrochemical cell assembly 100 are not shown in FIG. 5.

The first insert 122 has a first end 160 and a second end 162 that is disposed opposite the first end 160. In some configurations, the first insert 122 is positioned in the first axial flow channel 114 (not shown in FIG. 5) such that the first end 160 is adjacent to the first end 102 of the electrochemical cell assembly 100. The first insert 122 has a thickness Y1, when viewed perpendicular to the axial direction X, that is non-uniform. For example, the first insert 122 has a geometry that includes a tapered portion 164. The tapered portion 164 has a taper in which the thickness Y1 increases from the first end 160 to the second end 162. Thus, when disposed within the first axial flow channel 114, the first insert 122 causes the cross-sectional area of the first axial flow channel 114 to decrease from the first end 160 to the second end 162.

The first insert 122 includes one or more protuberance(s) 166. The first insert 122 can include any suitable number of protuberance(s) 166. The protuberance(s) 166 extend from a surface of the first insert 122 in the lateral direction R. The protuberance(s) 166 divide the first axial flow channel 114 (not shown in FIG. 5) into a plurality of first sub-channels 168. In the illustrated embodiment, the first insert 122 includes five protuberances 166 to form six first sub-channels 168. In some embodiments, the first sub-channels 168 are generally "C"-shaped or "U"-shaped.

In some embodiments, the protuberance(s) 166 may have one or more legs to further divide the first sub-channels 168. The one or more legs may direct flow across the flow plates in the electrochemical cells in a desired manner. For example, the protuberance(s) 166 may assist with distributing flow in the lateral direction, as well as in the axial direction X. The protuberance(s) 166 may act as lateral separators that may separate the first axial flow channel 114 into different sized sub-channels 168 or regions.

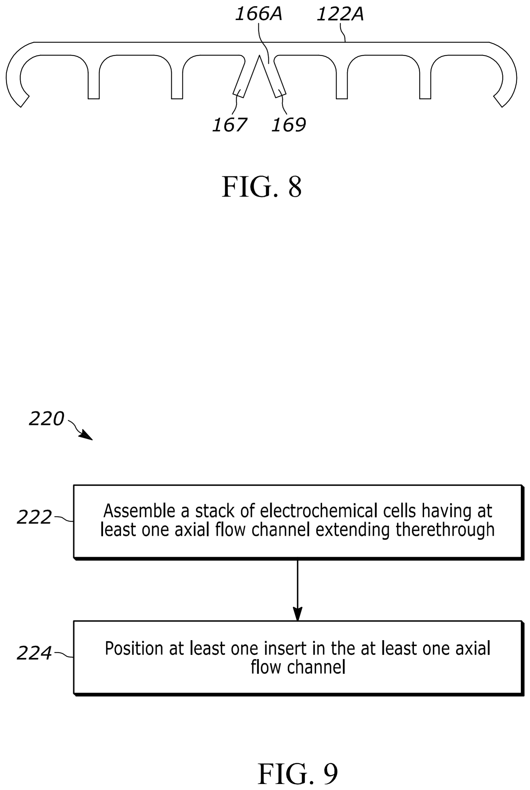

As illustrated, the protuberance(s) 166 include a single leg, however, it is contemplated that one or more of the protuberance(s) 166 can have a plurality of legs. For example, the protuberance(s) 166 can have a forked configuration that includes a first leg and a second leg. FIG. 8 shows an example of an insert 122A having a protuberance 166A with a first leg 167 and a second leg 169.

In some embodiments, one or more of the protuberance(s) 166 have a thickness Y3 that is tapered. For example, the thickness Y3 of the protuberance(s) can increase or decrease moving in the lateral direction R away from the main body of the first insert 122. The thickness Y3 of the protuberance(s) 166 can be adjusted to improve flow distribution.

The second insert 124 has a first end 170 and a second end 172 that is disposed opposite the first end 170. In some configurations, the second insert 124 is positioned in the second axial flow channel 116 (not shown in FIG. 5) such that the first end 170 is adjacent to the first end 102 of the electrochemical cell assembly 100. The second insert 124 has a thickness Y2 when viewed perpendicular to the axial direction X that is non-uniform. For example, the second insert 124 has a geometry that includes a tapered portion 174. The tapered portion 174 has a taper that increases in thickness Y2 from the first end 170 to the second end 172. Thus, when disposed within the second axial flow channel 116, the second insert 124 causes the cross-sectional area of the second axial flow channel 116 to decrease from the first end 170 to the second end 172.

The second insert 124 includes one or more protuberance(s) 176. The second insert 124 can include any suitable number of protuberance(s) 176. The protuberance(s) extend laterally from a surface of the second insert 124. The protuberance(s) 176 divide the second axial flow channel 116 (not shown in FIG. 5) into a plurality of second sub-channels 178. In the illustrated embodiment, the second insert 124 includes two protuberances 176 to form three second sub-channels 178. In some embodiments, the second sub-channels 178 are generally "C"-shaped or "U"-shaped. Though, the second sub-channels 178 can have any suitable shape. In some embodiments, the protuberance(s) 176 may have one or more legs to further divide the second sub-channels 178. The one or more legs may direct flow across the flow plates in the electrochemical cells in a desired manner.

In the illustrated embodiment, the third insert 126 is generally the same shape as the first insert 122. Though, it is to be understood that, in some embodiments, the third insert 126 and the first insert 122 may be different shapes.

Similarly, in the illustrated embodiment, the fourth insert 128 is generally the same shape as the second insert 124. Though, it is to be understood that, in some embodiments, the fourth insert 126 and the second insert 124 may be different shapes.

In some embodiments, one or more of the first insert 122, the second insert 124, the third insert 126, and the fourth insert 128 are made from an electrically non-conductive material. The non-conductive material may be any suitable non-conductive material and, in some examples, is a ceramic material

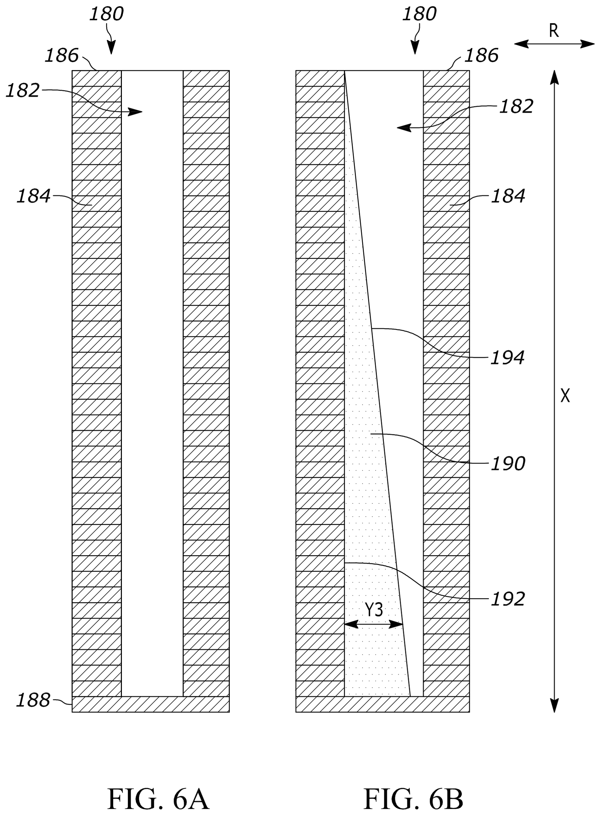

FIG. 6A shows an axial flow channel 182 that extends through an exemplary electrochemical cell assembly 180. The electrochemical cell assembly 180 has a first end 186 and a second end 188. The electrochemical cell assembly 180 includes a plurality of flow plates 184 that define the axial flow channel 182. In FIG. 6A, the axial flow channel 182 has a uniform cross-section when viewed perpendicular to the axial direction X. For example, the cross-section of the axial flow channel 182 does not change when moving from the first end 186 to the second end 188.

FIG. 6B shows an exemplary insert 190 disposed in the axial flow channel 182. In some embodiments, the insert 190 is friction fit in the axial flow channel 182.The insert 190 includes a first wall 192 and a second wall 194. The first wall 192 and the second wall 194 extend in the axial direction X. A distance between the first wall 192 and the second wall 194 defines a thickness Y3 of the insert 190. The second wall 194 is disposed at an angle relative to the first wall 192. As a result, the insert 190 has a taper. Due to the taper of the insert 190, the thickness Y3 is non-uniform. For example, the thickness Y3 of the insert 190 increases from the first end 186 of the electrochemical cell assembly 180 to the second end 188 along the length of the electrochemical cell assembly 180. When the insert 190 is positioned in the axial flow channel 182, the shape of the axial flow channel 182 is non-uniform in the axial direction X. As illustrated, the size of the axial flow channel 182 decreases from the first end 186 to the second end 188 due to the presence of the insert 190 in the axial flow channel 182. For example, a cross-sectional area of the axial flow channel 182 decreases along the axial direction X from the first end 186 to the second end 188. The reduction in the cross-sectional area from the first end 186 to the second end 188 balances flow through the electrochemical cell assembly 180.

In the illustrated embodiment, the insert 190 extends along an entire length of the axial flow channel. In this manner, the insert 190 passes through each of the plurality of flow plates 184.

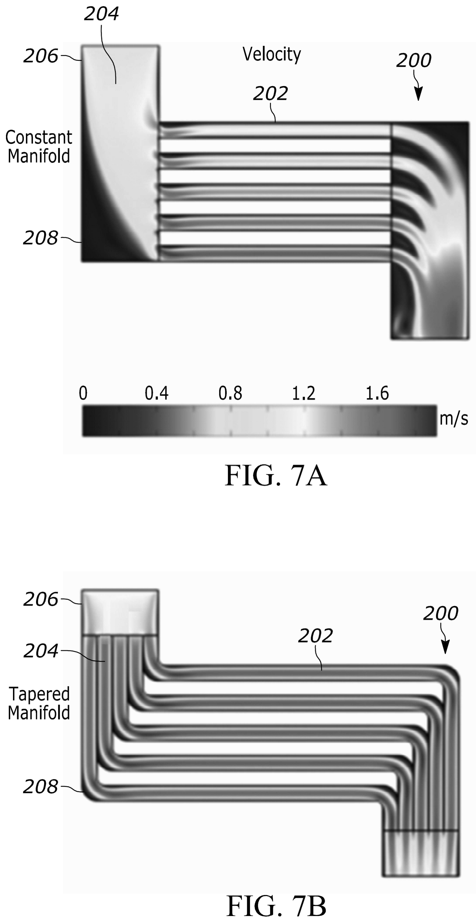

FIGS. 7A and 7B are graphs showing the velocity of fluids flowing through a cross section of an exemplary electrochemical cell assembly 200.

FIG. 7A shows the flow of fluid through the electrochemical cell assembly 200 without an insert. The electrochemical cell assembly 200 has a plurality of electrochemical cells 202 and an axial flow channel 204 that feeds an input stream comprising a fluid to the plurality of electrochemical cells 202. In FIG. 7A, the axial flow channel 204 has a constant cross-sectional area. In FIG. 7A, the velocity of fluid feeding the electrochemical cells decreases from the top (e.g., a first end) 206 to the bottom (e.g., a second end) 208 of the electrochemical cell assembly 200. Thus, portions of the bottom 208 of the electrochemical cell assembly 200 are starved.

FIG. 7B shows the flow of fluid through the electrochemical cell assembly 200 with an insert disposed in the axial flow channel 204. The insert causes the axial flow channel 204 to have a tapered shape. Due to the insert, the axial flow channel 204 has a cross-sectional area that decreases from the top 206 to the bottom 208 of the electrochemical cell assembly 200. In FIG. 7B, the velocity of fluid feeding the plurality of electrochemical cells 202 is relatively constant from the top 206 to the bottom 208 of the electrochemical cell assembly 200. Thus, the insert effectively balances flow through the plurality of electrochemical cells 202 in the electrochemical cell assembly 200.

In some approaches, an electrochemical cell assembly, such as the electrochemical cell assembly 100 of FIG. 1, can be assembled using the method 220 of FIG. 9. At 222, a stack comprising a plurality of electrochemical cells (e.g., an electrochemical cell assembly) is assembled. In some examples, the stack of electrochemical cells may be the electrochemical cell assembly 100 of FIGS. 1, 3, and 4. Further, the electrochemical cells may be electrochemical cell 106 of FIG. 2. The stack of electrochemical cells has at least one axial flow channel extending therethrough in an axial direction. The axial direction extends from a first end that receives an input stream and discharges an output stream to a second end that is disposed opposite the first end. To assemble the stack of electrochemical cells, each cell may be sealed and electrically isolated from adjacent electrochemical cells. In some aspects, a plurality of flow plates are used to electrically isolate each cell from adjacent electrochemical cells. The flow plates include at least one slot that defines a portion of the axial flow channel. The axial flow channel that extends from the first end of the electrochemical cell assembly to the second end.

Once the stack is assembled, at 224, at least one insert is positioned in the axial flow channel. The at least one insert defines a cross-sectional area for the axial flow channel when viewed perpendicular to the axial direction that is non-uniform along the axial direction. In some embodiments, the insert is one of the first insert 122, the second insert 124, the third insert 126, or the fourth insert 128 of FIGS. 4-5. In some embodiments, the insert is the insert 190 shown in FIG. 6B.

Further aspects of the disclosure are provided by the subject matter of the following clauses:
An electrochemical cell assembly defining a first end that receives an input stream and a second end disposed opposite the first end, the electrochemical cell assembly discharging an output stream, the electrochemical cell assembly comprising: a plurality of electrochemical cells, each electrochemical cell in the plurality of electrochemical cells comprising: an electrolyte, a first electrode disposed on a first side of the electrolyte; and a second electrode disposed on a second side of the electrolyte; a plurality of flow plates disposed between adjacent electrochemical cells in the plurality of electrochemical cells, each of the plurality of flow plates comprising at least one slot, the at least one slot defining a portion of an axial flow channel that extends from the first end to the second end of the electrochemical cell assembly; and at least one insert disposed in the axial flow channel, the at least one insert defining another portion of the axial flow channel, the at least one insert having a geometry that is non-uniform along an axial direction that extends from the first end to the second end of the electrochemical cell assembly.

The electrochemical cell assembly of any preceding clause, wherein the geometry of the at least one insert comprises a taper that increases in size from the first end to the second end of the electrochemical cell assembly.

The electrochemical cell assembly of any preceding clause, wherein the at least one insert has a cross-sectional area when viewed from the axial direction that increase in size from the first end to the second end of the electrochemical cell assembly.

The electrochemical cell assembly of any preceding clause, the axial flow channel is in fluid communication with at least one of the first electrode or the second electrode.

The electrochemical cell assembly of any preceding clause, wherein the axial flow channel has a cross-sectional area when viewed along the axial direction that decreases in size from the first end to the second end of the electrochemical cell assembly.

The electrochemical cell assembly of any preceding clause, wherein the at least one insert comprises a first wall that is disposed adjacent to the plurality of electrochemical cells and a second wall that is disposed opposite and spaced from the first wall, and wherein the first wall and the second wall extend define an insert thickness therebetween.

The electrochemical cell assembly of any preceding clause, wherein the insert thickness is non-uniform from the first end to the second end of the electrochemical cell assembly.

The electrochemical cell assembly of any preceding clause, wherein the insert thickness increases from the first end to the second end of the electrochemical cell assembly.

The electrochemical cell assembly of any preceding clause, wherein the first wall is disposed at an angle relative to the second wall.

The electrochemical cell assembly of any preceding clause, wherein the electrochemical cell assembly further defines a lateral flow direction that extends perpendicular to the axial direction, and wherein the first wall of the at least one insert comprises at least one protuberance divides the axial flow channel into a plurality of sub-channels.

The electrochemical cell assembly of any preceding clause, wherein the plurality of sub-channels are generally C-shaped.

The electrochemical cell assembly of any preceding clause, wherein the at least one protuberance comprises a first leg and a second leg.

The electrochemical cell assembly of any preceding clause, wherein the at least one insert extends along an entire length of the axial flow channel.

The electrochemical cell assembly of any preceding clause, wherein the at least one insert is friction fit within the axial flow channel.

The electrochemical cell assembly of any preceding clause, wherein the at least one slot is generally oblong in shape.

The electrochemical cell assembly of any preceding clause, the at least one slot in each of the plurality of flow plates comprises a first slot and a second slot, the first slot defining a portion of a first axial flow channel that extends from the first end to the second end of the electrochemical cell assembly and is in fluid communication with the first electrodes in the plurality of electrochemical cells, and the second slot defining a portion of a second axial flow channel that extends from the first end to the second end of the electrochemical cell assembly and is in fluid communication with the second electrodes in the plurality of electrochemical cells.

The electrochemical cell assembly of any preceding clause, wherein the at least one insert comprises a first insert disposed in the first axial flow channel and a second insert disposed in the second axial flow channel.

The electrochemical cell assembly of any preceding clause, wherein the at least one insert is made from a non-conductive material.

The electrochemical cell assembly of any preceding clause, wherein the non-conductive material is a ceramic material.

The electrochemical cell assembly of any preceding clause, wherein the electrochemical cell assembly is a fuel cell or an electrolyzer.

A fuel cell comprising the electrochemical cell assembly of any preceding clause.

An electrolyzer comprising the electrochemical cell assembly of any preceding clause.

A method of assembling an electrochemical cell assembly, the method comprising: assembling a stack comprising a plurality of electrochemical cells, the stack of electrochemical cells having at least one axial flow channel extending therethrough in an axial direction; and positioning at least one insert in the at least one axial flow channel.

The method of any preceding clause, wherein the axial direction extends from a first end of the stack that receives an input stream and discharges an output stream to a second end of the stack that is disposed opposite the first end.

The method of any preceding clause, wherein the at least one insert defines a cross-sectional area for the axial flow channel when viewed perpendicular to the axial direction that is non-uniform along the axial direction.

The method of any preceding clause, wherein each of the plurality of electrochemical cells is sealed and electrically isolated from adjacent electrochemical cells.

The method of any preceding clause, further comprising isolate each of the plurality of electrochemical cells from adjacent electrochemical cells using a plurality of flow plates.

The method of any preceding clause, wherein each of the plurality of flow plates includes at least one slot that defines a portion of the axial flow channel.

## Claims

1. An electrochemical cell assembly (100, 180) defining a first end (102, 186) that receives an input stream and a second end (104, 188) disposed opposite the first end (102, 186), the electrochemical cell assembly discharging an output stream, the electrochemical cell assembly (100, 180) comprising:
a plurality of electrochemical cells (106), each electrochemical cell (106) in the plurality of electrochemical cells (106) comprising:
an electrolyte (130),
a first electrode (132) disposed on a first side (130A) of the electrolyte (130); and
a second electrode (134) disposed on a second side (130B) of the electrolyte (130);
a plurality of flow plates (108, 184) disposed between adjacent electrochemical cells (106) in the plurality of electrochemical cells (106), each of the plurality of flow plates (108, 184) comprising at least one slot, the at least one slot defining a portion of an axial flow channel (114, 116, 118, 120, 182) that extends from the first end (102, 186) to the second end (104, 188) of the electrochemical cell assembly (100, 180); and
at least one insert (122, 124, 126, 128, 190) disposed in the axial flow channel (114, 116, 118, 120, 182), the at least one insert (122, 124, 126, 128, 190) defining another portion of the axial flow channel (114, 116, 118, 120, 182), the at least one insert having a geometry that is non-uniform along an axial direction that extends from the first end (102, 186) to the second end (104, 188) of the electrochemical cell assembly (100, 180).

2. The electrochemical cell assembly (100, 180) of claim 1, wherein the geometry of the at least one insert (122, 124, 126, 128, 190) comprises a taper that increases in size from the first end (102, 186) to the second end (104, 188) of the electrochemical cell assembly (100, 180).

3. The electrochemical cell assembly (100, 180) of claim 1 or 2, wherein the at least one insert (122, 124, 126, 128, 190) has a cross sectional area when viewed from the axial direction that increase in size from the first end (102, 186) to the second end (104, 188) of the electrochemical cell assembly (100, 180).

4. The electrochemical cell assembly (100, 180) of any of claims 1 to 3, the axial flow channel (114, 116, 118, 120, 182) is in fluid communication with at least one of the first electrode (132) or the second electrode (134).

5. The electrochemical cell assembly (100, 180) of claim 4, wherein the axial flow channel (114, 116, 118, 120, 182) has a cross-sectional area when viewed along the axial direction that decreases in size from the first end (102, 186) to the second end (104, 188) of the electrochemical cell assembly (100, 180).

6. The electrochemical cell assembly (100, 180) of claim 5, wherein the at least one insert (122, 124, 126, 128, 190) comprises a first wall (192) that is disposed adjacent to the plurality of electrochemical cells (106) and a second wall (194) that is disposed opposite and spaced from the first wall (192), and wherein the first wall (192) and the second wall (194) extend define an insert (122, 124, 126, 128, 190) thickness therebetween.

7. The electrochemical cell assembly (100, 180) of claim 6, wherein the insert (122, 124, 126, 128, 190) thickness is non-uniform from the first end (102, 186) to the second end (104, 188) of the electrochemical cell assembly (100, 180,).

8. The electrochemical cell assembly (100, 180) of claim 7, wherein the insert (122, 124, 126, 128, 190) thickness increases from the first end (102, 186) to the second end (104, 188) of the electrochemical cell assembly (100, 180).

9. The electrochemical cell assembly (100, 180) of any of claims 6 to 8, wherein the first wall (192) is disposed at an angle relative to the second wall (194).

10. The electrochemical cell assembly (100, 180) of any of claims 6 to 9, wherein the electrochemical cell assembly (100, 180) further defines a lateral flow direction that extends perpendicular to the axial direction, and wherein the first wall (192) of the at least one insert (122, 124, 126, 128, 190) comprises at least one protuberance (166A) divides the axial flow channel (114, 116, 118, 120, 182) into a plurality of sub-channels (150B) (150A).

11. The electrochemical cell assembly (100, 180) of any of claims 1 to 10, wherein the at least one insert (122, 124, 126, 128, 190) extends along an entire length of the axial flow channel (114, 116, 118, 120, 182).

12. The electrochemical cell assembly (100, 180) of any of claims 1 to 11, the at least one slot in each of the plurality of flow plates (108, 184) comprises a first slot (136B) (136A) (136) and a second slot (138B) (138A) (138), the first slot (136B) (136A) (136) defining a portion of a first axial flow channel (114, 182) that extends from the first end (102, 186) to the second end (104, 188) of the electrochemical cell assembly (100, 180) and is in fluid communication with the first electrodes in the plurality of electrochemical cells (106), and the second slot (138B) (138A) (138) defining a portion of a second axial flow channel (116, 182) that extends from the first end (102, 186) to the second end (104, 188) of the electrochemical cell assembly (100, 180) and is in fluid communication with the second electrodes in the plurality of electrochemical cells (106).

13. The electrochemical cell assembly (100, 180) of claim 12, wherein the at least one insert (122, 124, 126, 128, 190) comprises a first insert (122, 190) disposed in the first axial flow channel (114, 182) and a second insert (124, 190) disposed in the second axial flow channel (116, 182).

14. The electrochemical cell assembly (100, 180) of any of claims 1 to 13, wherein the at least one insert (122, 124, 126, 128, 190) is made from a non-conductive material.

15. The electrochemical cell assembly (100, 180) of any of claims 1 to 14, wherein the electrochemical cell assembly (100, 180) is a fuel cell or an electrolyzer.
